# EUROPÄISCHE PATENTSCHRIFT

(11) **EP 0 837 803 B1**
(45) Veröffentlichungstag und Bekanntmachung des Hinweises auf die Patenterteilung: **05.09.2001**
(21) Anmeldenummer: 97923802.9
(22) Anmeldetag: 12.05.1997
(51) Int. Cl.: B60T 8/40

(54) **HYDRAULISCHE FAHRZEUGBREMSANLAGE**
HYDRAULIC VEHICLE BRAKING SYSTEM
SYSTEME DE FREINAGE HYDRAULIQUE POUR VEHICULE

(30) Priorität: 14.05.1996 DE 19619392; 19.12.1996 DE 19652978
(43) Veröffentlichungstag der Anmeldung: 29.04.1998
(73) Patentinhaber: ROBERT BOSCH GMBH, 70442 Stuttgart (DE)
(72) Erfinder: SCHMIDT, Günther, D-97941 Tauberbischofsheim (DE); BREITENBACHER, Jürgen, D-73650 Winterbach (DE); WOLFF, Hans-Jörg, D-73614 Schorndorf (DE); HEINSOHN, Rainer, D-71732 Tamm (DE); KLUG, Andreas, D-71229 Leonberg (DE); KAESS, Hermann, D-71732 Tamm (DE); ZEINER, Peter, D-70565 Stuttgart (DE)
(86) Internationale Anmeldenummer: DE9700951
(87) Internationale Veröffentlichungsnummer: WO9743152

(56) Entgegenhaltungen:
- EP-A- 0 465 820
- EP-A- 0 512 239
- FR-A- 2 709 459
- FR-A- 2 719 537
- US-A- 4 648 663
- US-A- 4 875 741

## Beschreibung

### Stand der Technik

Die Erfindung betrifft eine hydraulische Fahrzeugbremsanlage zur Blockierschutzregelung gemäß der Gattung des Hauptanspruchs.

Aus der US-PS 4 875 741 ist eine hydraulische Fahrzeugbremsanlage mit einer Blockierschutzregeleinrichtung bekannt. Die bekannte Fahrzeugbremsanlage weist einen Tandem-Hauptbremszylinder auf, an den zwei voneinander unabhängige, übereinstimmend aufgebaute Bremskreise angeschlossen sind, mit denen je ein angetriebenes und ein nicht angetriebenes Fahrzeugrad bremsbar sind. In jedem Bremskreis führt eine sich verzweigende Bremsleitung vom Hauptbremszylinder zu Radbremszylindern des angetriebenen und des nicht angetriebenen Fahrzeugrades. Jedem Radbremszylinder ist ein Radbremsventil vorgeschaltet. Des weiteren ist jedem Radbremszylinder eine seinem Radbremsventil parallel geschaltete Rückförderpumpe zugeordnet, deren Saugseite mit dem Radbremszylinder und deren Druckseite mit dem Hauptbremszylinder kommuniziert.

Zur Blockierschutzregelung werden die Rückförderpumpen eingeschaltet und das dem Radbremszylinder des zum Blockieren neigenden Fahrzeugrades zugeordnete Radbremsventil wird mindestens kurzzeitig einmal geschlossen. Durch unterschiedlich lange Ein- und Ausschaltdauern des Radbremsventils (Puls-Weiten-Modulation) läßt sich der Bremsflüssigkeitsmitteldruck im Radbremszylinder beliebig weit gegenüber dem Bremsflüssigkeitsdruck im Hauptbremszylinder herabsetzen. Der Bremsflüssigkeitsdruck im zugeordneten Radbremszylinder hat damit einen sägezahn- oder dreiecksförmigen Verlauf, wodurch der Druck so moduliert wird, daß das Fahrzeugrad nicht blockiert.

### Vorteile der Erfindung

Die erfindungsgemäße, hydraulische Fahrzeugbremsanlage mit den Merkmalen des Hauptanspruchs weist zusätzlich eine Antriebsschlupfregeleinrichtung auf. Sie hat den Vorteil, daß sich mit minimalem Bauaufwand, nämlich mit insgesamt sechs Magnetventilen, eine Fahrzeugbremsanlage mit radindividueller Blockierschutzregelung und mit Antriebsschlupfregelung verwirklichen läßt. Die beiden Pumpen eines Bremskreises können beispielsweise wie die in der eingangs genannten US-PS 4 875 741 offenbarten Pumpen ausgebildet sein, auf die insoweit Bezug genommen wird, oder durch eine an sich bekannte Stufenkolbenpumpe verwirklicht sein. Die Rückförderpumpe, an deren Saugseite der Radbremszylinder des nicht angetriebenen Fahrzeugrads angeschlossen ist, ist gemäß der Erfindung eine selbstsaugende Pumpe, wie sie an sich bekannt ist.

Zur Blockierschutzregelung werden die beiden Rückförderpumpen in Gang gesetzt und der Bremsflüssigkeitsdruck im Radbremszylinder eines zum Blockieren neigenden Fahrzeugrades wird beispielsweise durch Puls-Weiten-Modulation des jeweiligen Radbremsventils herabgesetzt. Das Umschaltventil und Radbremsventile von Radbremszylindern nicht zum Blockieren neigender Fahrzeugräder bleiben in ihrer offenen Stellung.

Zur Antriebsschlupfregelung werden die Rückförderpumpen in Gang gesetzt, das Umschaltventil geschlossen und das Radbremsventil, das dem Radbremszylinder des nicht angetriebenen Fahrzeugrades vorgeschaltet ist, bleibt geöffnet, so daß die Rückförderpumpe, an deren Saugseite der Radbremszylinder des nicht angetriebenen Fahrzeugrades angeschlossen ist, Bremsflüssigkeit zum Radbremszylinder des angetriebenen Fahrzeugrades fördert, und in diesem Bremsflüssigkeitsdruck aufbaut, wodurch das angetriebene Fahrzeugrad gebremst wird. Das Radbremsventil des Radbremszylinders des angetriebenen Fahrzeugrades bleibt offen, die Rückförderpumpe, an deren Saugseite der Radbremszylinder des angetriebenen Fahrzeugrades angeschlossen ist, fördert die Bremsflüssigkeitsmenge, die sie diesem Radbremszylinder entnimmt durch das Radbremsventil dem Radbremszylinder wieder zu, so daß sie den Bremsflüssigkeitsdruck in diesem Radbremszylinder nicht absenkt. Soll der Bremsflüssigkeitsdruck abgesenkt werden, wird das Umschaltventil für eine entsprechende Zeitdauer geöffnet.

Die erfindungsgemäße Fahrzeugbremsanlage hat den weiteren Vorteil, daß aufgrund der radindividuellen Druckmodulation eine Bremskraftverteilung beispielsweise zwischen Vorder- und Hinterachse abhängig von der Fahrzeugbeladung erfolgen kann. Auch läßt sich einer Schleuderneigung des Fahrzeugs entgegenwirken, wenn die angetriebenen Fahrzeugräder die Vorderräder sind, die sich wie bei der Antriebsschlupfregelung bremsen lassen, wenn die Drehbeschleunigung des Fahrzeugs um seine Hochachse einen Grenzwert überschreitet, d. h. bevor das Fahrzeug zu schleudern beginnt.

Die erfindungsgemäße Fahrzeugbremsanlage eignet sich außer für Autos auch für Motorräder oder sonstige Einspurfahrzeuge, die mit einer sog. Integralbremsanlage ausgerüstet sind, d. h. bei denen eine Vorder- und eine Hinterradbremse an einen gemeinsamen Bremskreis, üblicherweise an eine fußbetätigte Bremsanlage, angeschlossen sind.

Die Unteransprüche 2 bis 8 haben vorteilhafte Ausgestaltungen und Weiterbildungen der erfindungsgemäßen Fahrzeugbremsanlage zum Gegenstand. Die Ansprüche 9 bis 14 betreffen vorteilhafte Verfahren zur Blockierschutz- und Antriebsschlupfregelung der erfindungsgemäßen Fahrzeugbremsanlage.

Von Vorteil ist die Verwendung steuerbarer Durckbegrenzungsventile oder steuerbarer Differenzdruckventile als Radbremsventile und/oder als Umschaltventil (Ansprüche 5 und 6). Diese Ventile, die als Drosseln mit verstellbarem und auch vollständig verschließbarem Drosselquerschnitt wirken, ermöglichen ein sanftes Einregeln des Drucks in den Radbremszylindern auf einen Druck der ein Blockieren der Fahrzeugräder bei der Blockierschutzregelung und ein Durchdrehen der angetriebenen Fahrzeugräder bei der Antriebsschlupfregelung vermeidet oder auf einen akzeptableben Wert begrenzt. Der Druck in den Radbremszylindern läßt sich stetig und sanft ändern und damit den sich ständig ändernden Erfordernissen anpassen. Sprungartige Durckänderungen, Druckpulsationen und Druckspitzen, die bei der Bremsdruckmodulation mit Wegeventilen auftreten, wenn diese mit hoher Frequenz zwischen geöffneter und geschlossener Stellung umgeschaltet werden und dadurch Bremsflüssigkeit beschleunigt und abrupt wieder gestoppt wird, lassen sich durch die Verwendung von Druckbegrenzungsventilen oder Differenzdruckventilen vermeiden.

Bringt die stetige Regelung des Drucks in den Radbremszylindern mit den steuerbaren Druckbegrenzungsventilen oder Differenzdruckventilen beim Auto lediglich Komfortvorteile und geringere Beanspruchung der hydraulischen Komponente der Fahrzeugbremsanlage mit sich, ist für Motorräder die stetige und sanfte Regelung des Bremsdrucks in den Radbremszylindern nahezu unerläßlich, da ein abrupter Wechsel zwischen gebremstem und ungebremstem Fahrzeugrad mit hoher Frequenz, wie er bei der Bremsdruckmodulation mit Wegeventilen auftritt, ein Motorrad zumindest bei Kurvenfahrt stark destabilsiert und mit hoher Wahrscheinlichkeit zum Sturz führt.

### Zeichnung

Die Erfindung wird nachfolgend anhand dreier in der Zeichnung dargestellter Ausführungsbeispiele näher erläutert. Die drei Figuren zeigen hydraulische Schaltpläne dreier erfindungsgemäßer Fahrzeugbremsanlagen.

### Beschreibung der Ausführungsbeispiele

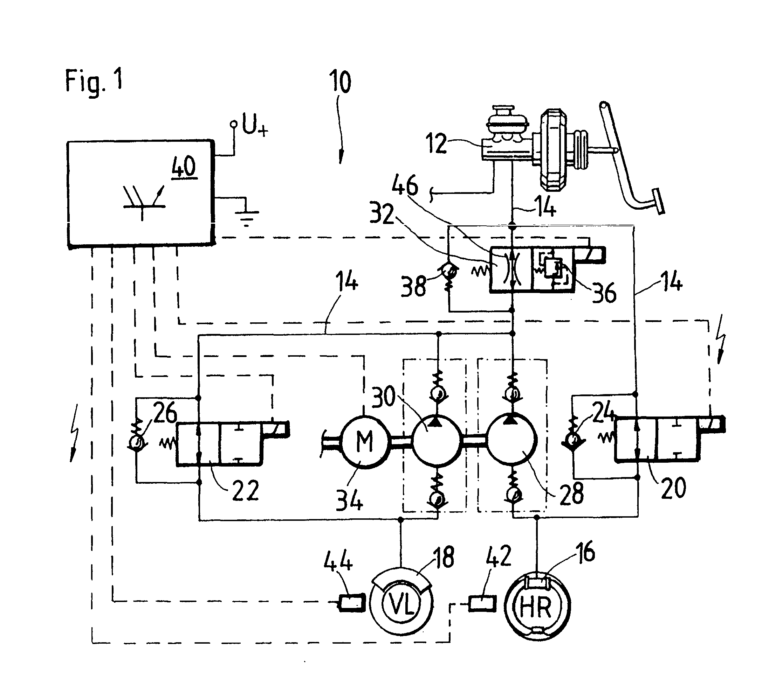

In Figur 1 ist ein Bremskreis einer erfindungsgemäßen, hydraulischen, insgesamt mit 10 bezeichneten Fahrzeugbremsanlage dargestellt. Ein zweiter unabhängiger, nicht dargestellter Bremskreis ist übereinstimmend aufgebaut und funktioniert in der selben Weise wie der dargestellte Bremskreis. Die beiden Bremskreise sind an einen Tandem-Hauptbremszylinder 12 angeschlossen. Die dargestellte, erfindungsgemäße Fahrzeugbremsanlage 10 hat eine X-Bremsenaufteilung, d. h. es ist ein vorderes Fahrzeugrad und ein diagonal gegenüberliegendes hinteres Fahrzeugrad an einen Bremskreis angeschlossen. An den dargestellten Bremskreis sind die linke Vorder- und die rechte Hinterradbremse angeschlossen. Dabei sei angenommen, daß die Vorderräder die angetriebenen Fahrzeugräder seien. Vorstehende Annahmen wurden zum Zwecke einer klaren Darstellung der Erfindung getroffen, sie sollen die Erfindung nicht auf die dargestellten Ausführungsbeispiele einschränken.

Die beiden Bremskreise der erfindungsgemäßen Fahrzeugbremsanlage 10 sind mit einer Bremsleitung 14 an jeweils eine Druckkammer des Tandem-Hauptbremszylinders 12 angeschlossen, die sich verzweigt und zu einem Radbremszylinder 16 eines nicht angetriebenen hinteren Fahrzeugrades und zu einem Radbremszylinder 18 eines angetriebenen vorderen Fahrzeugrades führt. Jedem Radbremszylinder 16, 18 ist ein Radbremsventil 20, 22 vorgeschaltet. Die Radbremsventile 20, 22 sind in ihrer Grundstellung geöffnete Magnetventile. Ihnen ist je ein in Richtung vom Radbremszylinder 16, 18 zum Hauptbremszylinder 12 durchströmbares Rückschlagventil 24, 26 parallel geschaltet.

Die Radbremszylinder 16, 18 sind an Saugseiten zweier Rückförderpumpen 28, 30 angeschlossen, deren Druckseiten miteinander verbunden und über ein Umschaltventil 32 an den Hauptbremszylinder 12 angeschlossen sind. Das Umschaltventil 32 ist ebenfalls ein in seiner Grundstellung offenes Magnetventil.

Die beiden Rückförderpumpen 28, 30 sind mit einem für beide Bremskreise gemeinsamen Pumpenmotor 34 antreibbar. Die beiden Rückförderpumpen 28, 30 können beispielsweise als eine an sich bekannte Stufenkolbenpumpe ausgebildet sein. Die Rückförderpumpe 28, an deren Saugseite der Radbremszylinder 16 des nicht angetriebenen Fahrzeugrades angeschlossen ist, ist selbstsaugend.

In das Umschaltventil 32 ist ein Druckbegrenzungsventil 36 integriert, das in der geschlossenen Schaltstellung des Umschaltventils 32 wirksam ist und die Druckdifferenz zwischen Radbremszylinderseite und Hauptbremszylinder auf einen vorgebenen Wert begrenzt. Das integrierte Druckbegrenzungsventil 36 wirkt wie ein dem Umschaltventil 32 parallel geschaltetes separates Druckbegrenzungsventil. Dem Umschaltventil 32 ist ein in Richtung vom Hauptbremszylinder 12 zu den Radbremszylindern 16, 18 durchströmbares Rückschlagventil 38 parallel geschaltet.

Die erfindungsgemäße Fahrzeugbremsanlage 10 weist ein elektronisches Steuergerät 40 auf, das Signale von Raddrehsensoren 42, 44 erhält und das den Pumpenmotor 34, die Radbremsventile 20, 22 und das Umschaltventil 32 ansteuert.

Herkömmliches Bremsen erfolgt wie üblich durch Betätigung des Hauptbremszylinders 12, der durch die in ihrer Grundstellung offfenen Radbremsventile 20, 22 mit den Radbremszylindern 16, 18 verbunden ist.

Zur Blockierschutzregelung wird, wenn an einem der Fahrzeugräder Blockiergefahr auftritt, der Pumpenmotor 34 eingeschaltet und damit die Rückförderpumpen 28, 30 in Gang gesetzt. Neigt beispielsweise das Vorderrad zum Blockieren wird das diesem zugeordnete Radbremsventil 22 kurzzeitig mindestens einmal geschlossen, während die Rückförderpumpe 30, an die der Radbremszylinder 18 des Vorderrades angeschlossen ist, Bremsflüssigkeit aus dem Radbremszylinder 18 herausfördert, wodurch der Bremsflüssigkeitsdruck im Radbremszylinder 18 absinkt und die Bremskraft am Vorderrad verringert wird. Die herausgeförderte Bremsflüssigkeit wird durch das offene Umschaltventil 32 dem Hauptbremszylinder 12 oder, abhängig von der Stellung des Radbremsventils 20, dem anderen Radbremszylinder 16 und der Saugseite der Rückförderpume 28 zugefördert, an die letzterer Radbremszylinder 16 angeschlossen ist. Wird das Radbremsventil 22 des zum Blockieren neigenden Fahrzeugrades wieder geöffnet, erhöht sich der Bremsflüssigkeitsdruck in dessen Radbremszylinder 18 wieder, bei mehrmaliger Wiederholung des Vorgangs ist der Bremsflüssigkeitsdruckverlauf im Radbremszylinder 18 damit dreiecks- oder sägezahnförmig.

Neigt das andere Fahrzeugrad, im angenommenen Fall das Hinterrad, nicht zum Blockieren, bleibt dessen Radbremsventil 20 geöffnet, und die Bremsflüssigkeitsmenge, die von der Rückförderpumpe 28, an deren Saugseite dieser Radbremszylinder 16 angeschlossen ist und die zusammen mit der anderen Rückförderpumpe 30 angetrieben wird, vom Radbremszylinder 16 des Hinterrades weggefördert wird, wird durch das offene Umschaltventil 32 und das offene Radbremsventil 20 diesem Radbremszylinder 16 wieder zugeführt. Die Rückförderpumpe 28, an deren Saugseite der Radbremszylinder 16 eines nicht zum Blockieren neigenden Fahrzeugrades angeschlossen ist, fördert Bremsflüssigkeit also im Kreis, der Bremsflüssigkeitsdruck in diesem Radbremszylinder 16 bleibt erhalten.

Das Umschaltventil 32 wirkt in seiner geöffneten Stellung als Drossel, was mit Bezugszahl 46 angedeutet ist. Diese Drossel 46 ist den miteinander verbundenen Druckseiten der Rückförderpumpen 28, 30 und dem Hauptbremszylinder 12 zwischengeschaltet. Sie verringert Druckstöße, die bei der Bremsflüssigkeitsdruckmodulation auftreten, wodurch eine Geräuschbildung und eine Pedalrückwirkung vermindert werden. Der Komfort der erfindungsgemäßen Fahrzeugbremsanlage 10 wird also durch die Drossel 46 des Umschaltventils 32 spürbar verbessert.

Zur weiteren Verringerung von Geräuschbildung und Pedalrückwirkung kann das Umschaltventil 32 während der Blockierschutzregelung angesteuert, d. h. geschlossen werden. Eine Rückförderung von Bremsflüssigkeit aus den Radbremszylindern 16, 18 kann nur durch das Druckbegrenzungsventil 36 hindurch erfolgen. Wegen des Öffnungsdrucks des Druckbegrenzungsventils 36 wird die Rückförderung wesentlich stärker gedrosselt als durch das als Drossel 46 wirkende, offene Umschaltventil 32, der Komfort also weiter erhöht. Ein Bremsflüssigkeitsdruckaufbau im Radbremszylinder 16 des nicht angetriebenen Hinterrads mittels des Hauptbremszylinders 12 wird vom geschlossenen Umschaltventil 32 nicht behindert, da dieses nicht in die zu diesem Radbremszylinder 16 führende Bremsleitung 14 eingeschaltet ist. Zum Radbremszylinder 18 des angetriebenen Vorderrades erfolgt der Bremsflüssigkeitsdruckaufbau bei geschlossenem Umschaltventil 32 durch das diesem parallel geschaltete Rückschlagventil 38 hindurch. Der Bremsflüssigkeitsdruck in den Radbremszylindern 16, 18 und damit die Bremskraft der Fahrzeugräder läßt sich also jederzeit schnell erhöhen, wenn beispielsweise der Straßenreibwert sprungartig ansteigt.

Neigen beide an einen Bremskreis angeschlossenen Fahrzeugräder zum Blockieren, können Druckstöße durch Bremsflüssigkeitsdruckmodulation und damit Geräuschentwicklung und Pedalrückwirkung begrenzt werden, indem die beiden Radbremsventile 20, 22 gegengleich angesteuert werden, so daß, wenn im Radbremszylinder 18 des Vorderrades der Bremsflüssigkeitsdruck erhöht wird der Bremsflüssigkeitsdruck im Radbremszylinder 16 des Hinterrades absinkt und umgekehrt. Wird in der Summe mehr Bremsflüssigkeit in den Radbremszylindern 16, 18 benötigt, kann diese jederzeit durch das zum geschlossenen Umschaltventil 32 parallel angeordnete Rückschlagventil 38 aus dem Hauptbremszylinder 12 entnommen werden.

Die Blockierschutzregeleinrichtung arbeitet bei zu hohem Antriebsschlupf folgendermaßen: Beginnt das angetriebene Fahrzeugrad, dies ist im Ausführungsbeispiel das Vorderrad, beim Beschleunigen, insbesondere beim Anfahren, durchzudrehen, wird der Pumpenmotor 34 eingeschaltet und die Rückförderpumpen 28, 30 dadurch in Gang gesetzt und das Umschaltventil 32 wird geschlossen. Die selbstsaugende Rückförderpumpe 28, an deren Saugseite der Radbremszylinder 16 des nicht angetriebenen Fahrzeugrades angeschlossen ist, saugt durch das diesem Radbremszylinder 16 vorgeschaltete, offene Radbremsventil 20 Bremsflüssigkeit aus dem Hauptbremszylinder 12 an. Diese Bremsflüssigkeit gelangt durch das Radbremsventil 22, das dem Radbremszylinder 18 des angetriebenen Fahrzeugrades vorgeschaltet ist, in diesen Radbremszylinder 18, so daß das Fahrzeugrad gebremst wird, um das Durchdrehen zu verhindern.

Da die Rückförderpumpe 30 an deren Saugseite der Radbremszylinder 18 des durchdrehenden Fahrzeugrades vom Pumpenmotor 34 zusammen mit der anderen Rückförderpumpe 28 angetrieben wird, saugt diese Rückförderpumpe 30 Bremsflüssigkeit aus dem Radbremszylinder 18 an. Die angesaugte Bremsflüssigkeitsmenge wird durch das Radbremsventil 22 dem Radbremszylinder 18 wieder zugeführt, d. h. die Rückförderpumpe 30 fördert im Kreis und senkt damit den Bremsflüssigkeitsdruck im Radbremszylinder 18 des angetriebenen Fahrezeugrades nicht ab.

Zur Verringerung der Bremskraft wird der Bremsflüssigkeitsdruck im Radbremszylinder 18 des angetriebenen Fahrzeugrades durch Schließen des Radbremsventils 22 des angetriebenen Fahrzeugrades und Öffnen des Umschaltventils 32 abgesenkt. Zum Absenken des Bremsflüssigkeitsdrucks im Radbremszylinder 18 des angetriebenen Fahrzeugrades kann auch das diesem vorgeschaltete Radbremsventil 22 geschlossen werden und das Umschaltventil 32 geschlossen bleiben, wodurch Bremsflüssigkeit von der Rückförderpumpe 30 aus dem Radbremszylinder 18 durch das Druckbegrenzungsventil 36 des geschlossenen Umschaltventils 32 zum Hauptbremszylinder 12 gefördert wird.

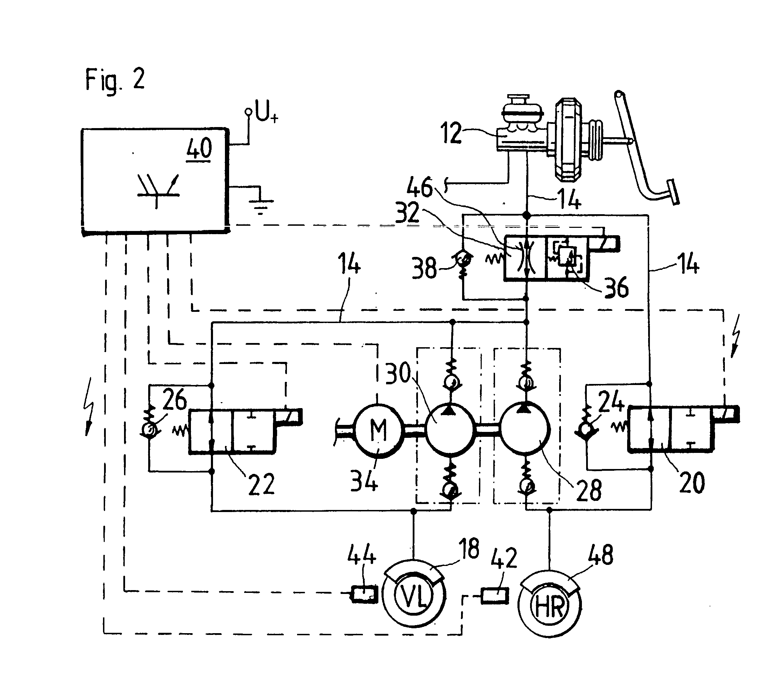

Dabei bleibt das Radbremsventil 20 des anderen Radbremszylinders 16 des nicht angetriebenen Fahrzeugrads geöffnet, dessen Rückförderpumpe 28 saugt also Bremsflüssigkeit aus dem Hauptbremszylinder 12 an und fördert diese durch das Druckbegrenzungsventil 36 zum Hauptbremszylinder 12 zurück. Die Rückförderpumpe 28 arbeitet wegen des geöffneten Radbremsventils 20 unbehindert im Kreis und entnimmt dem Radbremszylinder 16 keine Bremsflüssigkeit. Dadurch wird vermieden, daß im Radbremszylinder 16 des nicht angetriebenen Fahrzeugrades Unterdruck erzeugt wird. Deswegen kann bedenkenlos eine Scheibenbremse im nicht angetriebenen Fahrzeugrad Verwendung finden, wie es in Figur 2 dargestellt ist, da sich das Lüftspiel einer Scheibenbremse bei Unterdruck in ihrem Radbremszylinder 48 vergrößern könnte. Ansonsten kann eine Trommelbremse am nicht angetriebenen Fahrzeugrad vorgesehen werden, wie es in Figur 1 dargestellt ist. Diese verfügt üblicherweise über eine an sich bekannte, selbsttätige oder manuell zu betätigende Nachstelleinrichtung zum Nachstellen des Lüftspiels mit zunehmendem Bremsbelagverschleiß.

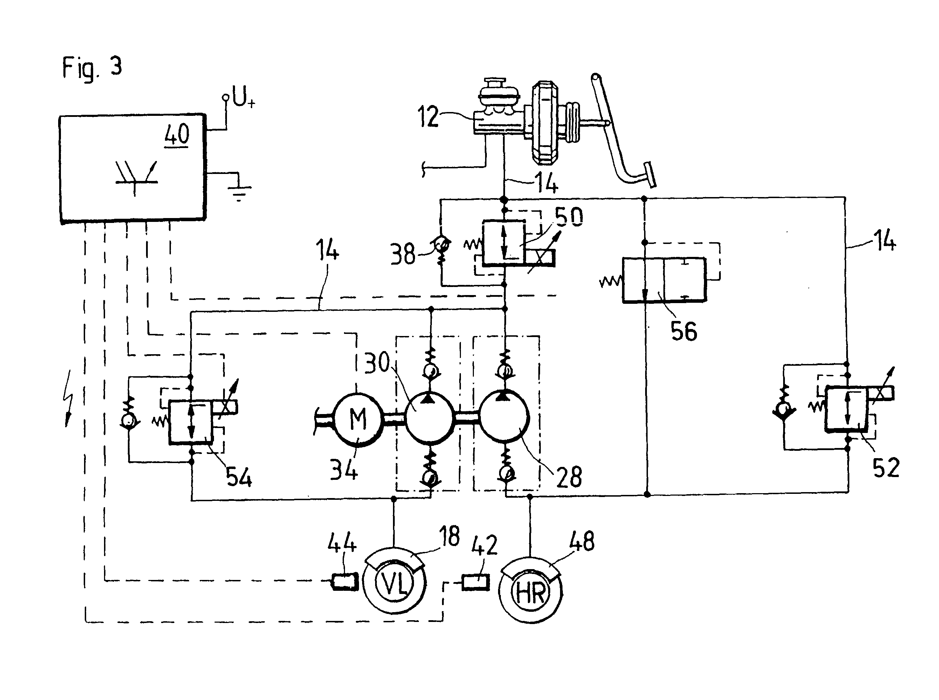

Mit Ausnahme der Scheibenbremse am nicht angetriebenen Fahrzeugrad ist die in Figur 2 dargestellte, erfindungsgemäße Fahrzeugbremsanlage ebenso aufgebaut, wie die in Figur 1 dargestellte Fahrzeugbremsanlage 10 und funktioniert in gleicher Weise. Für übereinstimmende Bauteile sind in den Figuren gleiche Bezugszahlen verwendet. Zur Vermeidung von Wiederholungen wird hinsichtlich Figuren 2 und 3 auf die entsprechenden Ausführungen zu Figur 1 verwiesen. Die angetriebenen Fahrzeugräder können beliebig mit Scheiben- oder Trommelbremsen ausgestattet sein.

Zusätzlich kann die Förderleistung der Rückförderpumpen 28, 30 und damit der Bremsflüssigkeitsdruck in den Radbremszylindern 16, 18 durch Regelung der Drehzahl des Pumpenmotors 34 auf eine erforderliche Höhe eingestellt werden. Die Regelung der Drehzahl erfolgt beispielsweise durch kurzzeitiges Ein- und Ausschalten, also durch Pulsweiten-Modulation der Stromzufuhr des Pumpenmotors 34.

Bei der in Figur 3 dargestellten Ausführungsform der Erfindung sind das Umschaltventil 32 und die Radbremsventile 20, 22 durch mit dem elektronischen Steuergerät 40 steuerbare Magnet-Differenzdruckventile 50, 52, 54 ersetzt. Des weiteren ist bei der in Figur 3 dargestellten Ausführungsform einer erfindungsgemäßen Fahrzeugbremsanlage die Saugseite der selbstsaugenden Rückförderpumpe 28, an die auch der Radbremszylinder 48 des nicht angetriebenen Fahrzeugrades (im Ausführungsbeispiel ein Hinterrad) angeschlossen ist, über ein Ansaugventil 56 an den Hauptbremszylinder 12 angeschlossen. Das Ansaugventil 56 kann als ein vorzugsweise in seiner Grundstellung geschlossenens 2/2-Wege-Magnetventil ausgebildet sein, das vom Steuergerät 40 betätigt wird (nicht dargestellt). Im dargestellten Ausführungsbeispiel ist das Ansaugventil ein in seiner Grundstellung geöffnetes, hydraulisch gesteuertes 2/2-Wegeventil, das mit dem im Hauptbremszylinder 12 erzeugten Druck geschlossen wird. Dieses Ansaugventil 56, das, ebenso wie die vom Hauptbremszylinder 12 zu ihm führende und die von ihm zur Saugseite der selbstsaugenden Rückförderpumpe 28 führende Bremsleitung, einen großen Durchflußquerschnitt aufweist, verringert den Ansaugwiderstand der selbstsaugenden Rückförderpumpe 28 während der Schlupfregelung bei nicht betätigtem Hauptbremszylinder 12, wodurch der Druckaufbau schneller erfolgt.

## Patentansprüche

1. Hydraulische Fahrzeugbremsanlage mit einem Hauptbremszylinder (12), von dem eine sich verzweigende Bremsleitung zu einem Radbremszylinder (18) eines angetriebenen Fahrzeugrades und zu einem Radbremszylinder (16, 48) eines nicht angetriebenen Fahrzeugrades führt, wobei jedem Radbremszylinder ein Radbremsventil (20,22,52,54) vorgeschaltet ist, und wobei jedem Radbremsventil eine Rückförderpumpe (28,30) parallel geschaltet ist, deren Saugseite mit dem Radbremszylinder und deren Druckseite mit dem Hauptbremszylinder (12) kommuniziert, **dadurch gekennzeichnet, daß** die an den Radbremszylinder (16, 48) des nicht angetriebenen Fahrzeugrads angeschlossene Rückförderpumpe (28) selbstsaugend ist, und daß die Fahrzeugbremsanlage (10) ein Umschaltventil (32; 50) aufweist, das zwischen den Druckseiten der Rückförderpumpen (28, 30) und dem Hauptbremszylinder (12) angeordnet ist, wobei das Umschaltventil (32; 50) dem Hauptbremszylinder (12) und dem Radbremszylinder (18) des angetriebenen Fahrzeugrades zwischengeschaltet ist und das Radbremsventil (20,52)für den Radbremszylinder (16,48) des nicht angetriebenen Fahrzeugrades parallel zum Umschaltventil (32; 50) an den Hauptbremszylinder (12) angeschlossen ist.

2. Fahrzeugbremsanlage nach Anspruch 1, **dadurch gekennzeichnet, daß** das nicht angetriebene Fahrzeugrad eine Trommelbremse aufweist.

3. Fahrzeugbremsanlage nach Anspruch 1 oder 2, **dadurch gekennzeichnet, daß** dem Umschaltventil (32) ein Druckbegrenzungsventil (36) parallel geschaltet ist.

4. Fahrzeugbremsanlage nach einem der Ansprüche 1 bis 3, **dadurch gekennzeichnet, daß** dem Umschaltventil (32) ein in Richtung vom Hauptbremszylinder (12) zum Radbremszylinder (18) des angetriebenen Fahrzeugrades durchströmbares Rückschlagventil (38) parallel geschaltet ist, das einen ungedrosselten Bremsdruckaufbau im Radbremszylinder (18) des angetriebenen Fahrzeugrades ermöglicht.

5. Fahrzeugbremsanlage nach Anspruch 1, **dadurch gekennzeichnet, daß** das Radbremsventil als steuerbares Druckbegrenzungsventil oder als steuerbares Differenzdruckventil (52, 54) ausgebildet ist.

6. Fahrzeugbremsanlage nach Anspruch 1, **dadurch gekennzeichnet, daß** das Umschaltventil als steuerbares Differenzdruckventil (50) oder als steuerbares Druckbegrenzungsventil ausgebildet ist.

7. Fahrzeugbremsanlage nach Anspruch 1, **dadurch gekennzeichnet, daß** die Saugseite der Rückförderpumpe (28), an deren Saugseite der Radbremszylinder (16; 48) des nicht angetriebenen Fahrzeugrads angeschlossen ist, über ein Ansaugventil (56) an den Hauptbremszylinder (12) angeschlossen ist.

8. Fahrzeugbremsanlage nach Anspruch 7, **dadurch gekennzeichnet, daß** das Ansaugventil (56) ein mit dem im Hauptbremszylinder (12) erzeugten Druck hydraulisch gesteuertes Ventil ist.

9. Verfahren zum Betrieb einer Fahrzeugbremsanlage nach Anspruch 3, **dadurch gekennzeichnet, daß** bei einem zum Blockieren neigenden Fahrzeugrad die Rückförderpumpen (28, 30) in Gang gesetzt werden, und daß zur Bremsflüssigkeitsdruckmodulation im Radbremszylinder (16, 18) des zum Blockieren neigenden Fahrzeugrades das diesem Radbremszylinder (16, 18) vorgeschaltete Radbremsventil (20, 22) kurzzeitig mindestens einmal geschlossen wird.

10. Verfahren nach Anspruch 9, **dadurch gekennzeichnet, daß** das Umschaltventil (32) geschlossen wird.

11. Verfahren zum Betrieb einer Fahrzeugbremsanlage nach einem der Ansprüche 1 bis 8, **dadurch gekennzeichnet, daß** bei zum Blockieren neigenden Fahrzeugrädern die Rückförderpumpen (28, 30) in Gang gesetzt werden, und daß zur Bremsflüssigkeitsdruckmodulation in den Radbremszylindern (16, 18) die Radbremsventile (20, 22) wechselweise angesteuert werden.

12. Verfahren zur Antriebsschlupfregelung einer Fahrzeugbremsanlage nach einem der Ansprüche 1 bis 8, **dadurch gekennzeichnet, daß** die Rückförderpumpen (28, 30) in Gang gesetzt werden, daß die Radbremsventile (20, 22) geöffnet bleiben, und daß das Umschaltventil (32) mindestens kurzzeitig einmal geschlossen, vorzugsweise Puls-weitenmoduliert wird.

13. Verfahren zur Antriebsschlupfregelung einer Fahrzeugbremsanlage nach Anspruch 3, **dadurch gekennzeichnet, daß** die Rückförderpumpen (28, 30) in Gang gesetzt werden, daß das Radbremsventil (20) des nicht angetriebenen Fahrzeugrades geöffnet bleibt, daß das Umschaltventil (32) geschlossen wird, und daß zur Bremsflüssigkeitsdruckmodulation im Radbremszylinder (18) des angetriebenen Fahrzeugrades das diesem vorgeschaltete Radbremsventil (22) mindestens kurzzeitig einmal geschlossen, vorzugsweise pulsweitenmoduliert wird.

14. Verfahren zur Antriebsschlupfregelung nach Anspruch 12 oder 13, **dadurch gekennzeichnet, daß** die Drehzahl des Pumpenmotors (34) durch kurzzeitiges Ein- und Ausschalten, vorzugsweise eine Pulsweiten-Modulation eingestellt wird.

## Claims

1. Hydraulic vehicle brake system with a brake master cylinder (12), from which a branching brake line leads to a wheel brake cylinder (18) of a driven vehicle wheel and to a wheel brake cylinder (16, 48) of an undriven vehicle wheel, a wheel brake valve (20, 22, 52, 54) being connected upstream of each wheel brake cylinder, and each wheel brake valve having connected in parallel with it a return pump (28, 30), the inlet side of which communicates with the wheel brake cylinder and the delivery side of which communicates with the brake master cylinder (12), **characterized in that** the return pump (28) connected to the wheel brake cylinder (16, 48) of the undriven vehicle wheel is self-priming, and in that the vehicle brake system (10) has a change-over valve (32; 50), which is arranged between the delivery sides of the return pumps (28, 30) and the brake master cylinder (12), the change-over valve (32; 50) being connected between the brake master cylinder (12) and the wheel brake cylinder (18) of the driven vehicle wheel, and the wheel brake valve (20, 52) for the wheel brake cylinder (16, 48) of the undriven vehicle wheel being connected in parallel with the change-over valve (32; 50) to the brake master cylinder (12).

2. Vehicle brake system according to Claim 1, **characterized in that** the undriven vehicle wheel has a drum brake.

3. Vehicle brake system according to Claim 1 or 2, **characterized in that** a pressure-relief valve (36) is connected in parallel with the change-over valve (32).

4. Vehicle brake system according to one of Claims 1 to 3, **characterized in that** the change-over valve (32) has connected in parallel with it a nonreturn valve (38), through which fluid can flow from the brake master cylinder (12) to the wheel brake cylinder (18) of the driven vehicle wheel and which allows an unrestricted brake--pressure build-up in the wheel brake cylinder (18) of the driven vehicle wheel.

5. Vehicle brake system according to Claim 1, **characterized in that** the wheel brake valve is designed as a controllable pressure-relief valve or as a controllable differential-pressure valve (52, 54).

6. Vehicle brake system according to Claim 1, **characterized in that** the change-over valve is designed as a controllable differential-pressure valve (50) or as a controllable pressure-relief valve.

7. Vehicle brake system according to Claim 1, **characterized in that** the inlet side of the return pump (28), to the inlet side of which the wheel brake cylinder (16; 48) of the undriven vehicle wheel is connected, is connected to the brake master cylinder (12) via an intake valve (56).

8. Vehicle brake system according to Claim 7, **characterized in that** the intake valve (56) is a valve that can be controlled hydraulically by means of the pressure produced in the brake master cylinder (12).

9. Method for operating a vehicle brake system according to Claim 3, **characterized in that** the return pumps (28, 30) are set in motion when a vehicle wheel has a tendency to lock up, and in that, for brake-fluid pressure modulation in the wheel brake cylinder (16, 18) of the vehicle wheel with a tendency to lock up, the wheel brake valve (20, 22) connected upstream of this wheel brake cylinder (16, 18) is briefly closed at least once.

10. Method according to Claim 9, **characterized in that** the change-over valve (32) is closed.

11. Method for operating a vehicle brake system according to one of Claims 1 to 8, **characterized in that** the return pumps (28, 30) are set in motion when vehicle wheels have a tendency to lock up, and in that, for brake-fluid pressure modulation in the wheel brake cylinders (16, 18), the wheel brake valves (20, 22) are activated alternately.

12. Method for traction control of a vehicle brake system according to one of Claims 1 to 8, **characterized in that** the return pumps (28, 30) are set in motion, in that the wheel brake valves (20, 22) remain open, and in that the change-over valve (32) is closed once at least briefly, preferably in a pulse-width-modulated manner.

13. Method for traction control of a vehicle brake system according to Claim 3, **characterized in that** the return pumps (28, 30) are set in motion, in that the wheel brake valve (20) of the undriven vehicle wheel remains open, in that the change-over valve (32) is closed, and in that, for brake-fluid pressure modulation in the wheel brake cylinder (18) of the driven vehicle wheel, the wheel brake valve (22) connected upstream of this cylinder is closed once at least briefly, preferably in a pulse-width-modulated manner.

14. Method for traction control according to Claim 12 or 13, **characterized in that** the speed of the pump motor (34) is adjusted by switching it on and off briefly, preferably a pulse-width modulation.

## Revendications

1. Installation de freins hydrauliques de véhicule comprenant un maître-cylindre (12) relié à une conduite de frein qui se divise entre un cylindre de frein de roue (18) d'une roue motrice du véhicule et un cylindre de frein de roue (16, 48) d'une roue du véhicule non motrice, avec une vanne de frein (20, 22, 52, 54) prévue en amont de chaque cylindre de frein de roue et avec une pompe de refoulement (28, 30) branchée en parallèle sur chaque vanne de frein de roue, le côté aspiration de cette pompe étant relié au cylindre de frein de roue et son côté de pression au maître-cylindre (12),
**caractérisée en ce que**
• la pompe de refoulement (28) reliée au cylindre de frein de roue (16, 48) de la roue non motrice du véhicule est auto-aspirante,
• l'installation de frein (10) comporte une vanne de commutation (32, 50) installée entre le côté de pression des pompes de refoulement (28, 30) et le maître-cylindre de frein (12),
• la vanne de commutation (32, 50) est prévue entre le maître-cylindre (12) et le cylindre de frein de roue (18) de la roue motrice, et
• la vanne de frein de roue (20, 52) du cylindre de frein (16, 48) de la roue non motrice est branchée en parallèle à la vanne de commutation (32, 50) sur le maître-cylindre (12).

2. Installation selon la revendication 1,
**caractérisée en ce que**
la roue non motrice comporte un frein à tambour.

3. Installation selon l'une quelconque des revendications 1 ou 2,
**caractérisée en ce qu'**
une soupape de limitation de pression (36) est branchée en parallèle sur la vanne de commutation (32).

4. Installation selon l'une quelconque des revendications 1 à 3,
**caractérisée en ce qu'**
un clapet anti-retour (38) est branché en parallèle sur la vanne de commutation (32), ce clapet anti-retour s'ouvrant dans le sens allant du maître-cylindre (12) vers le cylindre de frein (18) de la roue motrice du véhicule, ce clapet anti-retour permettant l'établissement d'une pression non étranglée dans le cylindre de frein (18) de la roue motrice du véhicule.

5. Installation selon la revendication 1,
**caractérisée en ce que**
la vanne de frein de roue est une soupape à limitation de pression, commandée, ou une soupape à pression différentielle commandée (52, 54).

6. Installation selon la revendication 1,
**caractérisée en ce que**
la vanne de commutation est une soupape à pression différentielle commandée (50) ou une soupape à limitation de pression commandée.

7. Installation selon la revendication 1,
**caractérisée en ce que**
le côté aspiration de la pompe de refoulement (28) auquel est relié le cylindre de frein (16, 48) de la roue non motrice du véhicule, est raccordé par une vanne d'aspiration (56) au maître-cylindre (12).

8. Installation selon la revendication 7,
**caractérisé en ce que**
la vanne d'aspiration (56) est une vanne à commande hydraulique par la pression générée par le maître-cylindre (12).

9. Procédé de mise en oeuvre d'une installation de freins de véhicule selon la revendication 3,
**caractérisé en ce que**
pour une roue du véhicule ayant tendance à se bloquer, on met en route les pompes de refoulement (28, 30) et pour moduler la pression du liquide de frein dans le cylindre de frein (16, 18) de la roue ayant tendance à se bloquer, on ferme au moins une fois brièvement la vanne de frein (20, 22) en amont de ce cylindre de frein de roue (16, 18).

10. Procédé selon la revendication 9,
**caractérisé en ce qu'**
on ferme la vanne de commutation (32).

11. Procédé de mise en oeuvre d'une installation de freins de véhicule selon l'une quelconque des revendications 1 à 8,
**caractérisé en ce qu'**
on met en route les pompes de refoulement (28, 30) pour des roues du véhicule ayant tendance à se bloquer, et
pour moduler la pression du liquide de frein dans les cylindres de freins de roues (16, 18) on commande alternativement les vannes de freins de roues (20, 22).

12. Procédé de régulation antipatinage à l'entraînement d'une installation de freins de véhicule selon l'une des revendications 1 à 8,
**caractérisé en ce qu'**
on met en route les pompes de refoulement (28, 30), on laisse ouvertes les vannes de freins de roues (20, 22) et
on ferme au moins une fois brièvement la vanne de commutation (32), de préférence selon une modulation de largeur d'impulsion.

13. Procédé de régulation antipatinage à l'entraînement d'une installation de freins de véhicule selon la revendi-' cation 3,
**caractérisé en ce qu'**
on met en route les pompes de refoulement (28, 30),
on laisse ouverte la vanne de frein (20) de la roue non motrice,
on ferme la vanne de commutation (32), et
pour la modulation de la pression du liquide de frein dans le cylindre de frein (18) de la roue motrice on ferme au moins une fois brièvement la vanne de frein (22) en amont de ce cylindre de frein, de préférence par une modulation de largeur d'impulsion.

14. Procédé de régulation antipatinage à l'entraînement selon l'une quelconque des revendications 12 ou 13,
**caractérisé en ce qu'**
on règle la vitesse de rotation du moteur de pompe (34) par une mise en marche/coupure brève, de préférence par une modulation de largeur d'impulsion.
